(19) Europäisches Patentamt
European Patent Office
Office européen des brevets

(11) Publication number: **0 396 379 A2**

(12) **EUROPEAN PATENT APPLICATION**

(21) Application number: **90304704.1**

(51) Int. Cl.[5]: **C09K 3/10**

(22) Date of filing: **01.05.90**

(30) Priority: **04.05.89 GB 8910192**

(43) Date of publication of application: **07.11.90 Bulletin 90/45**

(84) Designated Contracting States: **BE DE FR GB IT NL**

(71) Applicant: **Marston Palmer Ltd.**
**Wobaston Road**
**Fordhouses Wolverhampton WV10 6QJ(GB)**

(72) Inventor: **Felton, John**
**33 Herbert Avenue**
**Wellington, Telford, Shropshire(GB)**

(74) Representative: **Sykes, John Christopher et al**
**IMI plc Patents & Licensing Department P.O. Box 216**
**Witton Birmingham B6 7BA(GB)**

# (54) Adhesive sealant for barrier pressure packs.

(57) A product can of the type comprising an outer resilient container (1) and an inner collapsible container (2), the container being arranged to be sealed along an edge (6) by a sealant (18) comprising a two component adhesive formed from a filled Bisphenol A/Epichlorohydrin-based epoxy resin and a polyamide blend catalyst, the proportions of the components being between 70% to 25% of the resin by total weight and between 30% and 75% of the catalyst by total weight.

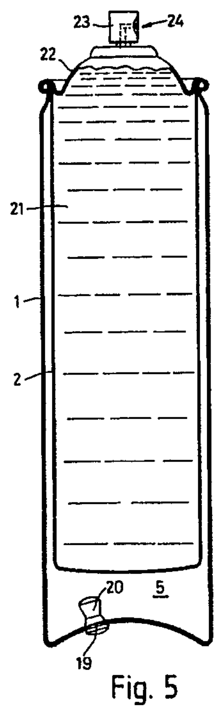


Fig. 5

EP 0 396 379 A2

## Container

This invention relates to a selection of materials for use in containers and has particular reference to materials for sealing aerosol containers.

Aerosol containers are well known for the storage and dispensing of liquid products. The liquid product is contained within a suitable container and a dip tube extends from a nozzle to the bottom of the container. A propellant gas or liquid floats on the top of the liquid to be expelled and the pressure of the propellant forces out liquid through a suitable nozzle when the aerosol button is depressed.

In order that the aerosol container can contain a maximum amount of contents, a propellant is preferred which can be added to the container in a liquid form, but which has a high vapour pressure so as to maintain a constant dispense pressure on top of the fluid within the container.

Some of the most frequently used propellants are fluorocarbons which are under increasing attack from an environmental point of view. It is suspected that such fluorocarbons may result in a reduction of the ozone layer within the atmosphere giving rise to potential serious environmental effects.

In some countries, the fluorocarbons have been replaced by hydrocarbons, but these hydrocarbons are inflammable and there is a danger of ignition of the aerosol or of the can itself.

An aerosol system would therefore be ideal which permitted the use of pressurised gas as the propellant, but such gases are difficult to use. There is a danger that the gas may dissolve in the liquid to be dispensed and contaminate it, or alternatively it could be the case that an insufficient volume of gas would be provided to permit full expulsion of the contents of the aerosol can.

The present invention is concerned with the selection of materials for sealing product cans which can be used as aerosol cans.

By the present invention there is provided a product can comprising an outer pressure resistant container and an inner collapsible container arranged to be located within the outer container to define a space there between, the space being arranged to accommodate a volume of propellant and the outer and inner containers being secured together with a sealant to ensure the space is pressure tight and the inner collapsible container will collapse under pressure from the propellant characterised in that the sealant is a two component adhesive formed from a filled Bisphenol A/Epichlorohydrin-based epoxy resin and a polyamide blend catalyst, the proportions of the components being between 70% to 25% of the resin by total weight and between 30% and 75% of the catalyst by total weight.

The percentage of catalyst may be in the range 35% to 70% or 40% to 65%, or 40% to 60% or 45% to 55% or may be 50%.

The resin may have the following characteristics

Uncatalysed viscosity 30,000 to 40,000 preferably 35,000 centipoises

The sealant after curing may have the following properties

Hardness, Shore D in the range 30-70, preferably 50

Bond Strength in Shear at Room Temperature in the range 220 to 230 $Kg/cm^2$

Flexural Strength 375 to 390 $Kg/cm^2$

Izod Impact Strength 21-23 Kg-cm/cm

The sealant may be cured at a temperature in the range 70 °C to 110 °C.

The sealant may be cured prior to a deformation process to form the joint between the inner and outer containers.

There may be a hole in the outer container to permit the insertion of the sealant through the space to seal the open ends and to permit injection of a propellant into the space between the two containers.

Preferably, both the inner and outer containers are formed of aluminium with the inner container being of thinner gauge so as to permit ready collapse of the inner container. Further preferably, the outer container is of a strength capable of resisting an internal pressure of up to 20 bar.

The preferred sealant is a material which is chemically polymerisable so as to increase its molecular weight and to form a hard pressure-resistant seal. Ideally the polymerisable chemical is highly liquid so as to be capable of being poured, sprayed or painted on the parts which are joined to produce mechanically formed joint between the inner and outer containers.

The sealant may contain a metal powder. The sealant may have a co-efficient of thermal expansion substantially equal to that of the aluminium containers. The co-efficient of thermal expansion may be in the range 25-50 x $10^{-6}$ per °C.

Furthermore in accordance with the present invention there is provided a method of forming a product can having a pressurisable space from an outer pressure resilient container and an inner collapsible container arranged to be secured within the outer container to define the space, the method comprising:

(i) placement of the inner container within the outer container;

(ii) rolling the container open end edges to define a can edge;

(iii) application of a sealant about the can edge comprising a two component adhesive formed from a filled Bisphenol A/Epichlorohydrin based resin and a polyamide blend catalyst, the proportions of the two components being 70% to 25% of the resin by total weight and 30% to 75% of the catalyst by total weight.

The product can is preferably manufactured by applying the two part adhesive to the inner and outer containers and bonding the inner and outer containers together by curing the sealant, after the sealant has been cured the inner and outer containers may be mechanically joined by deforming the bonded junction to form a mechanical seal. The mechanically joined components may be deformed by rolling.

Alternatively, the inner and outer containers may be mechanically joined at their open ends prior to sealing with the adhesive sealant.

The adhesive sealant may be applied by mechanically sealing the open ends together of the can, locating the can with its open end downwards, inserting sealant through the hole in the outer container, and keeping the sealant preferably at an elevated temperature in the range 60-100 °C.

The present invention also provides an aerosol can comprising a product can consisting of an outer pressure resilient container and an inner collapsible container arranged to be secured within the outer container to define a pressurisable space, the outer container and inner container being sealed together along an edge by a sealant comprising a two component adhesive formed from a filled Bisphenol A/Epichlorohydrin-based resin and a polyamide blend catalyst, the proportions of the two components being 70% to 25% of the resin by the total weight and 30% to 75% of the catalyst by total weight, the container being sealed about the edge by an end cap to provide an enclosure for product whilst the space is arranged to accommodate a propellant in order to facilitate collapse of the container as product is expelled through a nozzle attached to cap.

Preferably, the aerosol can has a hole arranged within the container to allow insertion of propellant in to the space.

The present invention also envisages a method of filling the propellant can which comprises the stages of filling the fluid space within the inner container and simultaneously or subsequently pressurising the space between the inner and outer containers with a propellant.

The propellant may be an inert gas and is preferably nitrogen. The nitrogen may be maintained at a pressure in the range 10-20 bars, preferably 12-18 bars, further preferably 15 bars or 15±1 bar.

By way of example embodiments of the present invention will now be described with reference to the accompanying drawings of which

FIGURE 1 is a sectional view of a product can for use in an aerosol can,

FIGURES 2 and 3 are cross-sectional views of alternative forms of product can,

FIGURE 4 is an enlarged sectional view of the joint between the inner and outer containers of Figure 1, and

FIGURE 5 is a sectional view of an aerosol can utilising the product can of Figure 1.

A product can for use in an aerosol is shown in Figure 1. The product can comprises an outer container and an inner container. The outer container is formed of aluminium and has an ability to withstand internal pressures of approximately 20 bar. The lower end of the outer container is blanked off by a domed end wall. The upper end of the outer container is open, as is the upper end of the inner container. The lower end of the inner container is blanked off with an end wall. A space is defined between the inner and outer containers. The inner container is also made of aluminium, but is of a thin film of aluminium which can readily collapse under the influence of pressure within the space.

The open ends of the upper and lower containers are joined together by rolling over the two layers in an outward direction, it will be appreciated that the two layers could be rolled over in an inward direction.

Figures 2 and 3 show alternative forms of product can. In figure 2 it can be seen that the inner aluminium container is formed with pleats which assist in the collapse of the inner container under the influence of pressure. The inner can is provided with an extended neck which nestles within a collar mounted in the upper mouth of the outer container. The collar and the upper mouth of the container are rolled together, but there is no direct mechanical linkage between the container and the collar.

In a yet further alternative form of the product can illustrated in Figure 3, the inner container, again provided with pleats, is mechanically joined to both the outer container and a collar.

As shown in Figure 4, the thin inner container and the thicker outer container are mechanically joined together by rolling over the edges of the two containers. An epoxy resin sealant forms a pressure-tight seal between the two layers of material. To effect the joint between the two layers, a mechanical seal is formed by rolling the two open edges together to form a product similar to that shown in Figure 1.

The preferred method of forming the seal between the two layers as shown in Figure 4 is as follows:

The two part adhesive comprising 50% epoxy resin, typically ECCOBOND 45 LV being a filled Bisphenol A/Epichlorohydrin-based epoxy resin available from Emerson & Cuming Inc, Dewey and Almy Chemical Division, W R Grace & Co, 869 Washington Street, Canton, MA 02021 with 50% catalyst 15 LV available from the same manufacturing source. The mixed product can be applied to both the inner and outer cans by rolling or brushing or it is possible to apply the mixture by spraying. To reduce the viscosity of the mixture the temperature of the resin can be raised to 70° before mixing with the catalyst. Alternatively or additionally, higher proportions of the catalyst may be used as the catalyst has a lower viscosity than the resin. One way of applying the two components is to spray each container from a separate nozzle so that the sprays intermingle and mix in situ on the ends of the cans.

Once the inside of the outer can and the outside of the inner can have been coated, the cans are assembled together without mechanical deformation. The resin is then cured by heating, typically for 30 minutes at 104 °C to produce a cured product. After the product has been cured the end of the can may be mechanically deformed to produce the rolled structure shown in Figures 1 and 5 or the rolled structure shown in Figures 2 and 3.

The preferred adhesive enables the can to be deformed after bonding and it is found that there is a good mechanical bond strength both before and after the forming operation. The adhesive is chemically resistant to the preferred propellant, nitrogen, and has been found to be leak-tight.

No other adhesives have been found which meet all of these requirements. The invention is therefore a selection of a suitable adhesive for this extremely arduous task.

In an alternative method of forming the seal between the inner container and the outer container either directly or via contact with an intermediate collar or other intermediate item, the can is placed on a rack with its open end downwards and it can be seen that there is a hole, normally filled by a plug in the now upper end of the outer container. Obviously, the plug would not be inserted for the sealing stage.

A polymerisable sealant is now injected into the space between the two containers through the hole. An important characteristic of the sealant is that it shall be sufficiently fluid to be able to be injected easily into the space and to run down the walls of the containers and fill the gaps at the now open ends to form a good seal. The sealant must then cure and therefore a preferred form of sealant is a polymerisable sealant which is polymerised by a chemical reaction or perhaps by heat or other suitable means. Normally, the polymerisable material would be a cross linkable material and would normally comprise a two-part sealant such as a polymerisable material and a catalyst. A particularly preferred form of sealant is an epoxy resin of general formula

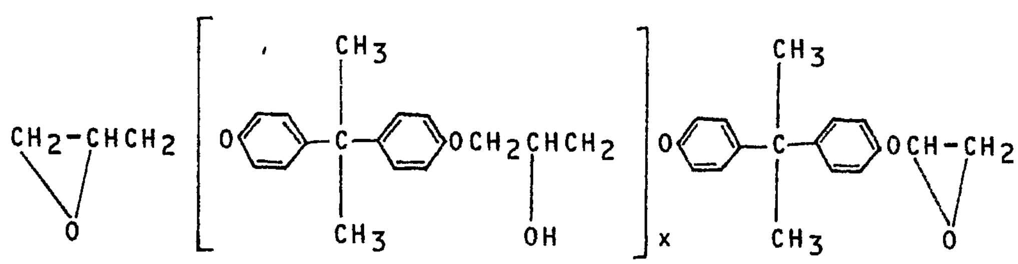

where x is chosen so as to provide a thin liquid which is readily flowable into the container. The value of x may be selected by simple experiment and preferably, the catalyst which would contain more than one active hydrogen, such as a primary or secondary amine, a polyamine or polybasic acid is chosen so as not to increase the viscosity of the material more than is necessary.

The sealant is injected to one side of the container so as readily to run down in the space between the inner and outer containers.

A suitable form of sealant may be an epoxy resin highly filled with aluminium powder which has the following characteristics:

i) A shear stress of .251 tons per square inch,

ii) A co-efficient of thermal expansion 28.6 x $10^5$ per °C,

iii) A working temperature range -196°C-82°C,

iv) A compressive strength of 16,700 pounds per square inch,

v) A Shore D hardness number of 90,

vi) A specific gravity in the cured condition equal to 2.18,

vii) A high resistance to thermal attack,

viii) A good resistance to chemicals and solvents,

ix) A cure shrinkage of approximately .001 cm per cm, and

x) A curing time of 6-12 hours at room temperature - to speed up curing, the assembly may be heated to 80 °C so that curing will occur in two hours.

The assembled product can is then filled with a product as shown and an end cap is attached. In conventional aerosols, a dip tube is provided, but with aerosols which utilise a collapsable inner can, such dip tubes are not required. A conventional aerosol valve is provided to control the flow of product through the small aperture. Details of the valve are not shown, but are well-known. If required, the end cap can be mechanically sealed to the product can or may be bonded to the product can.

Once the product is located within the inner can, nitrogen under pressure is injected into the space. Typically, nitrogen at 15 bar is injected. The injection takes place through the hole revealed by plug. After injecting the nitrogen into the space, the plug is replaced to seal the container.

The aerosol is then used in a conventional way by a consumer. Depression of the button opens an internal valve premitting liquid to flow through the valve and to be forced out of aerosol aperture in the conventional manner. The pressure of the nitrogen in the space causes inner container to collapse and this forces out the liquid through the nozzle.

It will be appreciated that the aerosol of the present invention does not utilise dangerous fluorocarbons and permits the use of high pressure inner gas such as nitrogen which has no deleterious effect on the environment. It will be appreciated that any suitable adhesive sealant could be used, but the filled epoxy resin of the present invention has been found to be particularly suitable, especially when an epoxy resin is chosen which, together with its filler, has the same or similar co-efficient of expansion of the aluminium of the cans.

The materials of the inner and outer cans may be selected in a conventional manner and may be formed of aluminium or steel or plastics material. However, aluminium or steel are preferred, or combinations of these metals.

## Claims

1. A product can comprising an outer pressure resistant container (1) and an inner collapsible container (2) arranged to be located within the outer container (1) to define a space (5) there between, the space (5) being arranged to accommodate a volume of propellant and the outer (1) and inner (2) containers being secured together with a sealant (18) to ensure the space (5) is pressure tight and the inner collapsible container will collapse under pressure from the propellant characterised in that the sealant (18) is a two component adhesive formed from a filled Bisphenol A/Epichlorohydrin-based epoxy resin and a polyamide blend catalyst, the proportions of the components being between 70% to 25% of the resin by total weight and between 30% and 75% of the catalyst by total weight.

2. A product can as claimed in claim 1 wherein the outer container (1) incorporates a hole 19 arranged either to allow insertion of sealant and/or propellant into the space (5).

3. A product can as claimed in claim 1 or 2 wherein the sealant (18) is composed to have a co-efficient of thermal expansion substantially equal to that of the material from which the outer (1) and inner (2) containers are made.

4. A product can as claimed in any preceding claim wherein the sealant is composed to be chemically polymerisable and liquid in an uncured state.

5. A method of forming a product can having a pressurisable space (5) from an outer pressure resilient container (1) and an inner collapsible container (2) arranged to be secured within the outer container (1) to define the space (5), the method comprising:

(i) placement of the inner container (2) within the outer container (1);

(ii) rolling the container (1), (2) open end edges to define a can edge (6);

(iii) application of a sealant (18) about the can edge (6) comprising a two component adhesive formed from a filled Bisphenol A/Epichlorohydrin based resin and a polyamide blend catalyst, the proportions of the two components being 70 to 25% of the resin by total weight and 30 to 75% of the catalyst by total weight.

6. A method as claimed in claim 5 wherein the can edge (6) is mechanically crimped.

7. A method as claimed in claims 5 or 6 wherein the sealant (18) is applied to the edge (6) either by pouring, spraying or painting.

8. A method as claimed in claims 5 or 6 wherein the sealant (18) is applied to the edge (6) through a hole (19) in the container (1) whereby the sealant (18) is allowed to migrate to the edge (6).

9. An aerosol can comprising a product can consisting of an outer pressure resilient container (1) and an inner collapsible container (2) arranged to be secured within the outer container (1) to define a pressurisable space (5), the outer container (1) and inner container (2) being sealed together along an edge

(6) by a sealant (18) comprising a two component adhesive formed from a filled Bisphenol A/Epichlorohydrin-based resin and a polyamide blend catalyst, the proportions of the two components being 70% to 25% of the resin by the total weight and 30% to 75% of the catalyst by total weight, the container (2) being sealed about the edge (6) by an end cap (22) to provide an enclosure for product (21) whilst the space (5) is arranged to accommodate a propellant in order to facilitate collapse of the container (2) as product (21) is expelled through a nozzle (23), (24) attached to cap (22).

10. An aerosol can as claimed in claim 9 wherein a hole (19) is arranged within the container (1) to allow insertion of propellant in to space (5).

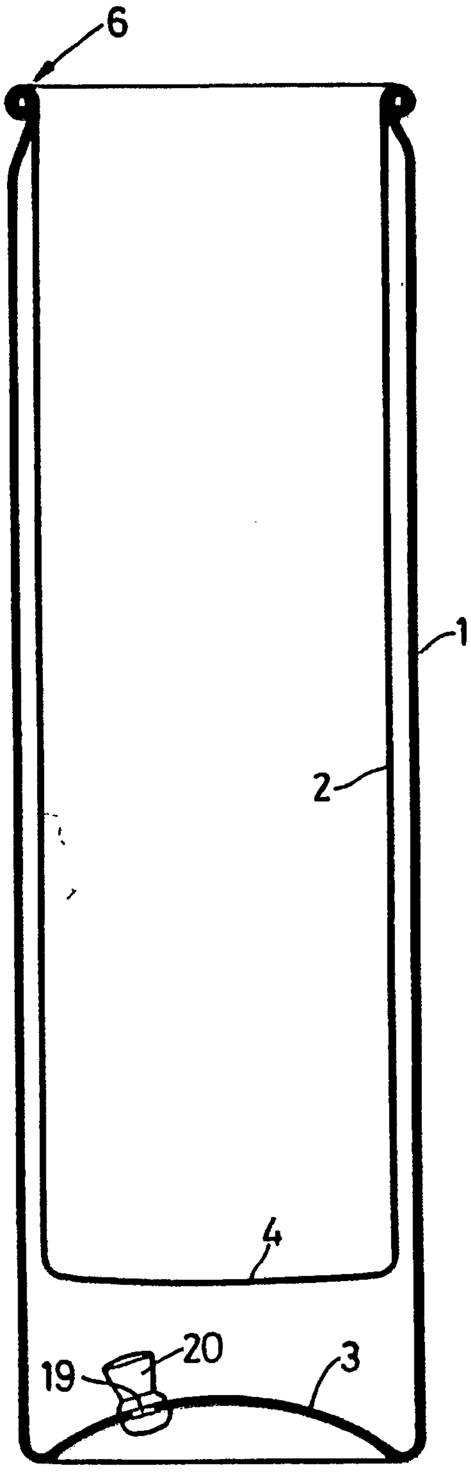


Fig. 1

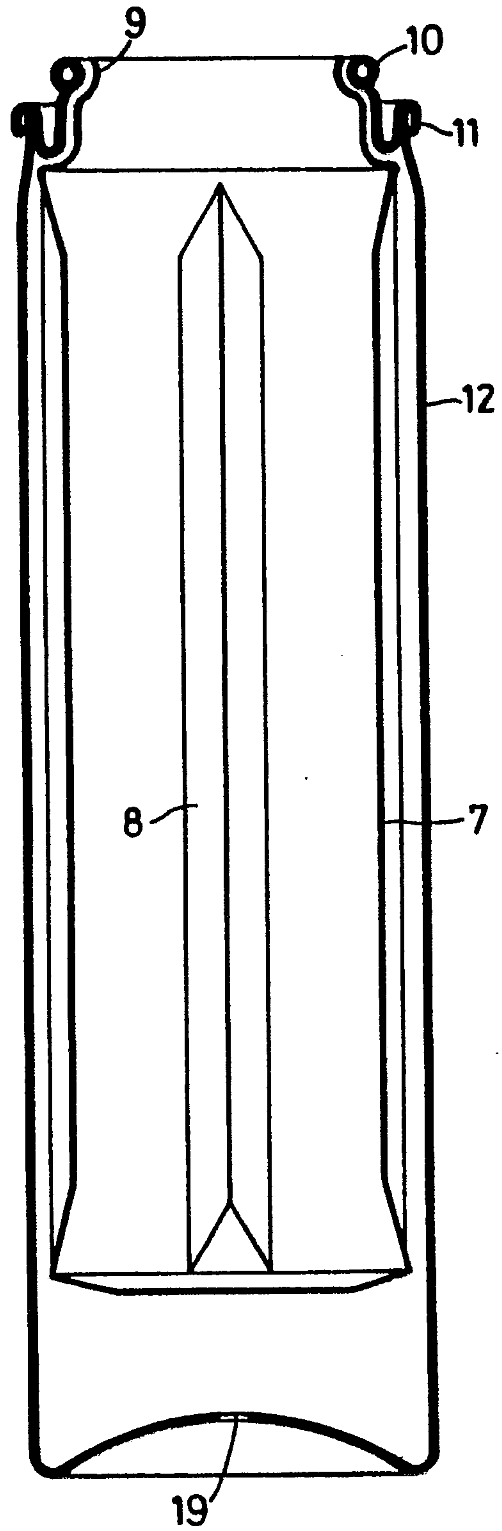


Fig. 2

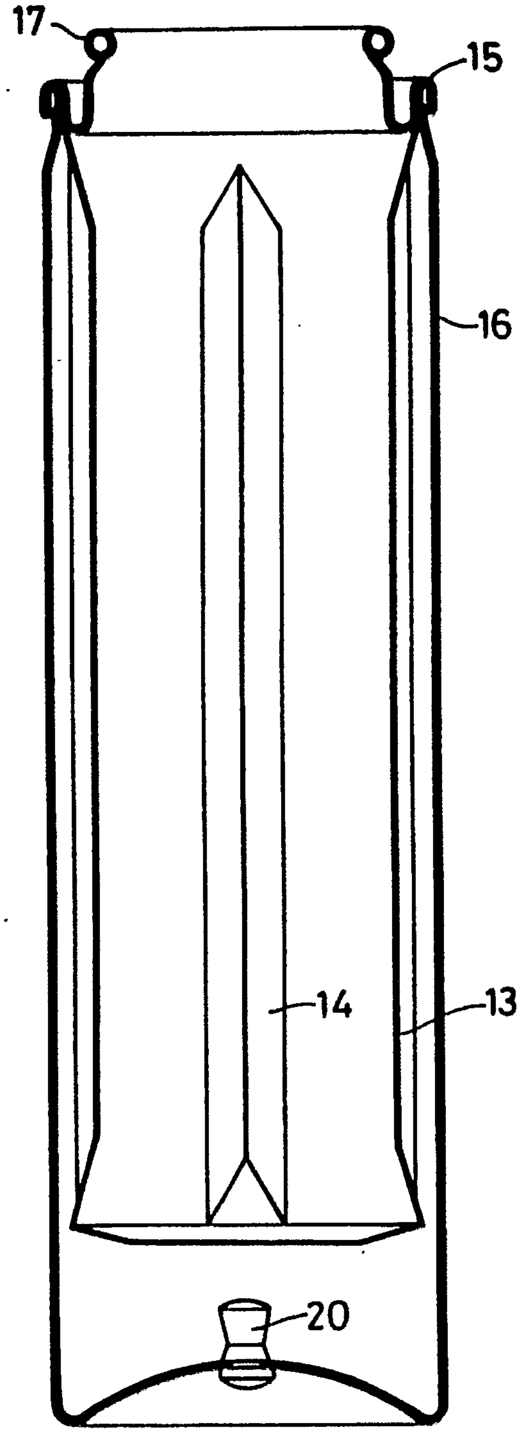


Fig. 3

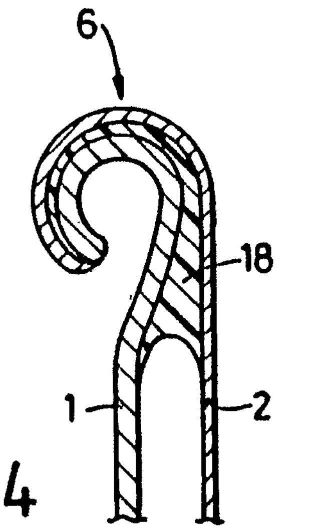


Fig. 4

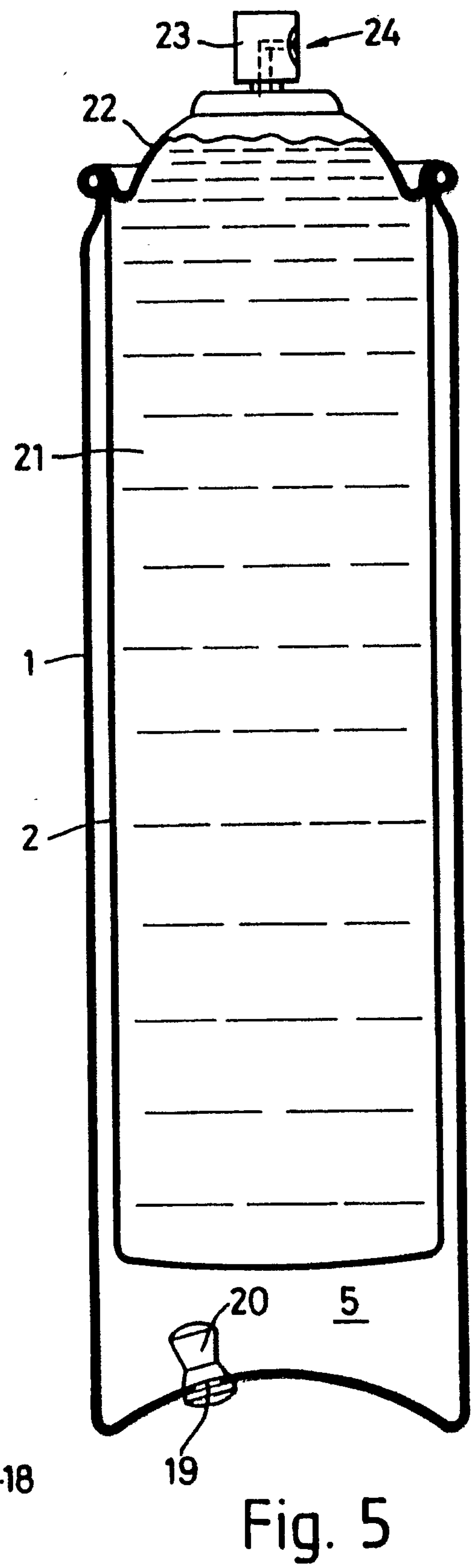


Fig. 5